(19) Europäisches Patentamt
European Patent Office
Office européen des brevets

(11) EP 3 604 005 A1

(12) EUROPEAN PATENT APPLICATION
published in accordance with Art. 153(4) EPC

(43) Date of publication:
05.02.2020 Bulletin 2020/06

(51) Int Cl.:
B60J 1/02 $^{(2006.01)}$     B60J 1/00 $^{(2006.01)}$
C03C 27/12 $^{(2006.01)}$     G02B 27/01 $^{(2006.01)}$

(21) Application number: 18777178.7

(22) Date of filing: 26.03.2018

(86) International application number:
PCT/JP2018/012138

(87) International publication number:
WO 2018/181180 (04.10.2018 Gazette 2018/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.03.2017 JP 2017062000

(71) Applicant: Nippon Sheet Glass Company, Limited
Tokyo 108-6321 (JP)

(72) Inventors:
• OGAWA, Hisashi
Tokyo 108-6321 (JP)
• OGAWA, Ryohei
Tokyo 108-6321 (JP)
• ANDO, Kunio
Tokyo 108-6321 (JP)
• KANKI, Satoshi
Tokyo 108-6321 (JP)
• KITTAKA, Shigeo
Tokyo 108-6321 (JP)

(74) Representative: Stanley, Andrew Thomas et al
Pilkington Group Limited
Intellectual Property
Pilkington European Technical Centre
Hall Lane, Lathom
Ormskirk, Lancashire L40 5UF (GB)

(54) **WINDSHIELD**

(57)     The present invention provides a windshield that has a display region onto which information is projected using light emitted from a head-up display device, the windshield including an outer glass plate, an inner glass plate that is arranged opposite to the outer glass plate, and an interlayer that is arranged between the outer glass plate and the inner glass plate, wherein lattice points are defined at a pitch of no greater than 20 mm in the display region, and when wedge angles at the lattice points are measured using an interferometer with 240 × 240 pixels or more, a difference between the largest value and the smallest value of the wedge angles is no greater than 0.32 mrad.

Fig. 9

EP 3 604 005 A1

**Description**

Technical Field

The present invention relates to a windshield of an automobile.

Background Art

Head-up display devices that project information such as the vehicle speed by emitting light toward a windshield of a vehicle have been proposed. If such a head-up display device is used, the driver can check the vehicle speed by looking at information projected onto the windshield instead of looking at a meter such as a speed meter within the vehicle, and accordingly need not largely deviate their eyes from the forward direction during driving. Therefore, the use of the head-up display device is advantageous in that safety during driving can be improved.

However, there is a problem that, if the above-described head-up display device is used for a windshield that has a uniform thickness, a double image phenomenon occurs in which an image projected onto the windshield, that is, information such as the vehicle speed is duplicated due to generation of an image that is seen as a result of reflection from an inner surface of the windshield and generation of an image that is seen as a result of reflection from an outer surface of the windshield. In order to solve this problem, for example, Patent Literature 1 proposes constituting a windshield with an outer glass plate, an inner glass plate, and a resin interlayer sandwiched between these glass plates, and forming the interlayer so as to have a wedge-shaped cross section so that the entire windshield has a wedge-shaped cross section. As a result, two images overlap and generation of a double image can be prevented.

Citation List

Patent Literature

Patent Literature 1: JP 2007-223883A

Summary of Invention

Technical Problem

However, recent years have seen a trend toward enlargement of a display region of information that is projected onto a windshield by a head-up display device. The inventors of the present invention confirmed through studies that, if the display region is enlarged, a double image is still generated even if a wedge-shaped interlayer as described above is used. The present invention was made to solve this problem, and the object thereof is to provide a windshield that can prevent generation of a double image even if a display region onto which information is projected by a head-up display device is enlarged.

Solution to Problem

The inventors of the present invention carried out intensive studies to solve the above problem. As a result, it was found that generation of a double image can be prevented with the following invention.

Aspect 1.

A windshield that has a display region onto which information is projected using light emitted from a head-up display device, the windshield including:

an outer glass plate;
an inner glass plate that is arranged opposite to the outer glass plate; and
an interlayer that is arranged between the outer glass plate and the inner glass plate,
wherein lattice points are defined at a pitch of no greater than 20 mm in the display region, and
when wedge angles at the lattice points are measured using an interferometer with 240 × 240 pixels or more, a difference between the largest value and the smallest value of the wedge angles is no greater than 0.32 mrad.

Aspect 2.

The windshield according to Aspect 1, wherein the display region has a size of 150 mm or more in an up-down direction and 150 mm or more in a horizontal direction.

Aspect 3.

The windshield according to Aspect 1 or 2, wherein the interlayer has a wedge-shaped cross section and a thickness of the interlayer increases upward.

Aspect 4.

The windshield according to any one of Aspects 1 to 3, wherein the outer glass plate and the inner glass plate are arranged such that a flow direction of glass in a float method extends in an up-down direction.

Aspect 5.

The windshield according to Aspect 4, wherein the outer glass plate and the inner glass plate have irregularities of 0.1 $\mu$m/8 mm or more in a direction perpendicular to the flow direction of glass.

Aspect 6.

The windshield according to Aspect 4 or 5, wherein an angle between the flow direction of glass and the up-down direction is 10° or less.

Aspect 7.

The windshield according to any one of Aspects 1 to 6, wherein the windshield is installed in a vehicle at an installation angle of 60° or less relative to a horizontal direction.

Aspect 8.

The windshield according to any one of Aspects 1 to 7, wherein the inner glass plate has a plurality of regions that differ from each other in radius of curvature in a horizontal direction, and
the display region is formed in a region other than a region that has the largest radius of curvature out of the plurality of regions.

Aspect 9.

A method for manufacturing a windshield that has a display region onto which information is projected using light emitted from a head-up display device, the method including steps of:

preparing an outer glass plate;
preparing an inner glass plate;
preparing an interlayer; and
arranging the interlayer between the outer glass plate and the inner glass plate and bonding together the outer glass plate, the inner glass plate, and the interlayer,
wherein lattice points are defined at a pitch of no greater than 20 mm in the display region, and
when wedge angles at the lattice points are measured using an interferometer with 240 × 240 pixels or more, a difference between the largest value and the smallest value of the wedge angles is no greater than 0.32 mrad.

Aspect 10.

The method for manufacturing a windshield according to Aspect 9, wherein the outer glass plate and the inner glass plate are formed using a float method, and
the outer glass plate and the inner glass plate are arranged such that a flow direction of glass in the float method extends in an up-down direction.

Advantageous Effects of Invention

With the windshield and the method for manufacturing the same according to the present invention, generation of a double image can be prevented even if a display region onto which information is projected by a head-up display device is enlarged.

Brief Description of Drawings

FIG. 1 is a cross-sectional view of one embodiment of a windshield according to the present invention.
FIG. 2 is a plan view of FIG. 1.
FIG. 3 is a cross-sectional view of an interlayer.
FIG. 4 is a side view showing the positional relationship between a head-up display device and a windshield.
FIG. 5 is a side view showing one example of a manufacturing method of a glass plate.
FIG. 6 is a cross-sectional view showing one example of glass plates and an interlayer.
FIG. 7 is a cross-sectional view showing one example of glass plates and an interlayer.
FIG. 8 is a cross-sectional view showing one example of glass plates and an interlayer.
FIG. 9 is a plan view of a windshield showing a display region.
FIG. 10 is an enlarged plan view of FIG. 9 showing one example of a method for measuring a wedge angle.
FIG. 11 is a diagram for explaining a double image.
FIG. 12 is a diagram for explaining a double image.
FIG. 13 is a diagram for explaining a double image.
FIG. 14 is a graph showing the relationship between a wedge angle in a y direction and a double image.
FIG. 15 is a graph showing the relationship between a wedge angle in an x direction and a double image.
FIG. 16 is a plan view showing one example of a manufacturing method of a glass plate.
FIG. 17 is a cross-sectional view taken along line A-A in FIG. 16.
FIG. 18 is a cross-sectional view of a windshield.
FIG. 19 is a cross-sectional view of a windshield.
FIG. 20 is a plan view for explaining measurement of wedge angles according to an example and a comparative example.
FIG. 21 is a diagram illustrating a schematic configuration of a measurement device of the wedge angle.
FIG. 22 is a diagram showing inclination of a wave front within a diameter of 96 mm of a glass surface obtained by analyzing an interference fringe pattern.
FIG. 23 is a diagram showing a measurement region in which lattice points are arranged.
FIG. 24 is a graph showing wedge angles at lattice points in the example.
FIG. 25A is a diagram showing a photograph of lattice points in the example.
FIG. 25B is a diagram showing a photograph of lattice points in the example.
FIG. 26 is a graph showing wedge angles at lattice points in the comparative example.
FIG. 27A is a diagram showing a photograph of lattice points in the example.
FIG. 27B is a diagram showing a photograph of lattice points in the example.

Description of Embodiments

The following describes one embodiment of a windshield according to the present invention with reference to the drawings. The windshield according to this embodiment has a display region onto which information is projected using light that is emitted from a head-up display device.

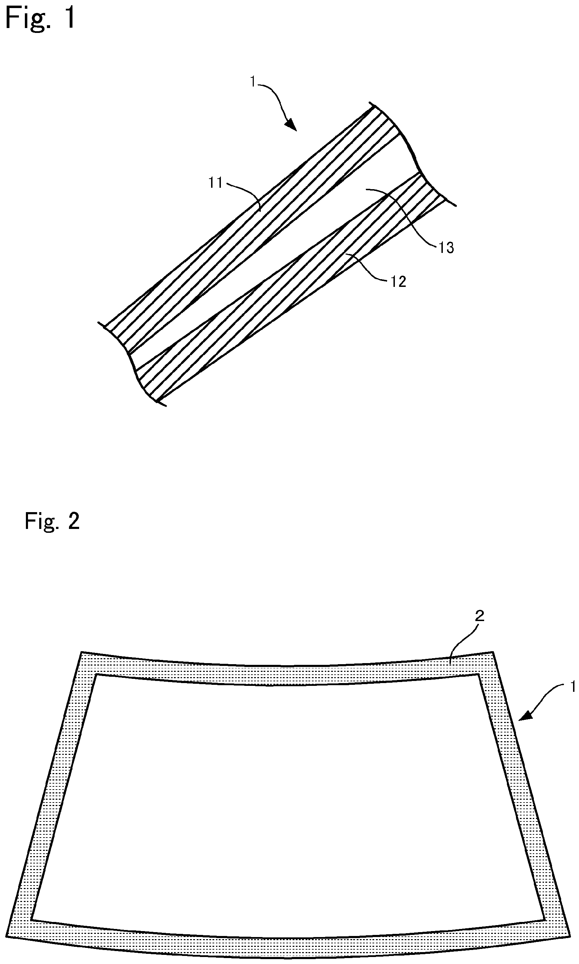

FIG. 1 is a cross-sectional view of the windshield according to this embodiment and FIG. 2 is a plan view of FIG. 1. As shown in FIGS. 1 and 2, the windshield according to this embodiment includes a laminated glass 1 that includes an outer glass plate 11, an inner glass plate 12, and an interlayer 13 that is arranged between these glass plates 11 and 12. A mask layer 2 is layered on the laminated glass 1. The following describes respective members.

1. Outer glass plate and inner glass plate

First, the outer glass plate 11 and the inner glass plate 12 will be described. Known glass plates can be used as the outer glass plate 11 and the inner glass plate 12, and these glass plates can be made of heat-ray absorbing glass, regular clear glass, green glass, or UV green glass. However, the glass plates 11 and 12 need to realize visible light transmittance that conforms to the safety standards of the country in which the automobile is to be used. For example, adjustments can be made so that the outer glass plate 11 ensures a required solar absorptance and the inner glass plate 12 provides visible light transmittance that meets safety standards. The following shows an example of clear glass, an example of heat-ray absorbing glass, and an example of soda lime-based glass.

Clear glass

$SiO_2$: 70 to 73 mass%
$Al_2O_3$: 0.6 to 2.4 mass%
CaO: 7 to 12 mass%
MgO: 1.0 to 4.5 mass%
$R_2O$: 13 to 15 mass% (R is an alkali metal)
Total iron oxide ($T\text{-}Fe_2O_3$) in terms of $Fe_2O_3$: 0.08 to 0.14 mass%

Heat-ray absorbing glass

With regard to the composition of heat-ray absorbing glass, a composition obtained, which is based on the composition of clear glass, by setting the ratio of the total iron oxide ($T\text{-}Fe_2O_3$) in terms of $Fe_2O_3$ to 0.4 to 1.3 mass%, the ratio of $CeO_2$ to 0 to 2 mass%, and the ratio of $TiO_2$ to 0 to 0.5 mass%, and reducing the components (mainly $SiO_2$ and $Al_2O_3$) forming the framework of glass by an amount corresponding to the increases in $T\text{-}Fe_2O_3$, $CeO_2$, and $TiO_2$ can be used, for example.

Soda lime-based glass

$SiO_2$: 65 to 80 mass%
$Al_2O_3$: 0 to 5 mass%
CaO: 5 to 15 mass%
MgO: at least 2 mass%
NaO: 10 to 18 mass%
$K_2O$: 0 to 5 mass%
MgO + CaO: 5 to 15 mass%
$Na_2O$ + $K_2O$: 10 to 20 mass%
$SO_3$: 0.05 to 0.3 mass%
$B_2O_3$: 0 to 5 mass%
Total iron oxide ($T\text{-}Fe_2O_3$) in terms of $Fe_2O_3$: 0.02 to 0.03 mass%

Although there is no particular limitation on the thickness of the laminated glass according to this embodiment, the total thickness of the outer glass plate 11 and the inner glass plate 12 is preferably set to 2.4 to 5.0 mm, more preferably 2.6 to 4.6 mm, and even more preferably 2.7 to 3.2 mm, from the viewpoint of weight reduction. As described above, it is necessary to reduce the total thickness of the outer glass plate 11 and the inner glass plate 12 in order to reduce the weight, and therefore, although there is no particular limitation on the thicknesses of the outer glass plate 11 and the inner glass plate 12, the thicknesses of these glass plates can be determined as described below, for example. Note that the thicknesses of the glass plates can be measured using a micrometer.
Durability against external damage and impact resistance are mainly required for the outer glass plate 11. For example, if the laminated glass is used as a windshield of an automobile, impact resistance against flying objects such as small stones is required. On the other hand, the weight increases as the thickness increases, which is not preferable. From this viewpoint, the thickness of the outer glass plate 11 is preferably 1.8 to 2.3 mm, and more preferably 1.9 to 2.1 mm. It is possible to determine the thickness to employ according to the use of the glass.
The thickness of the inner glass plate 12 can be made equal to the thickness of the outer glass plate 11, but in order to reduce the weight of the laminated glass, for example, the thickness can be made smaller than that of the outer glass plate 11. Specifically, when the strength of the glass is taken into consideration, the thickness is preferably 0.6 to 2.3 mm, more preferably 0.8 to 2.0 mm, and even more preferably 1.0 to 1.4 mm. The thickness is yet more preferably 0.8 to 1.3 mm. For the inner glass plate 12 as well, it is possible to determine the thickness to employ according to the use of the glass.
The outer glass plate 11 and the inner glass plate 12 according to this embodiment have curved shapes . It is supposed that, if a laminated glass has a curved shape, the larger the depth of bend is, the lower the sound insulation performance is. The depth of bend is an amount indicating the bend of a laminated glass. For example, when a straight line connecting the center of an upper side and the center of a lower side of a laminated glass is set, the greatest distance between this straight line and the laminated glass is defined as the depth of bend.

Here, one example of a method for measuring the thickness of the laminated glass 1 will be described. First, with respect to the measurement position, the measurement is performed at two positions : an upper position and a lower position on a center line extending vertically at the center of the laminated glass in the left-right direction. Although there is no particular limitation on the measurement device, a thickness gauge such as SM-112 manufactured by TECLOCK Corporation can be used, for example. During measurement, the laminated glass is arranged such that its curved surface is placed on a flat surface, and an end portion of the laminated glass is sandwiched and measured with the above-described thickness gauge.

2. Interlayer

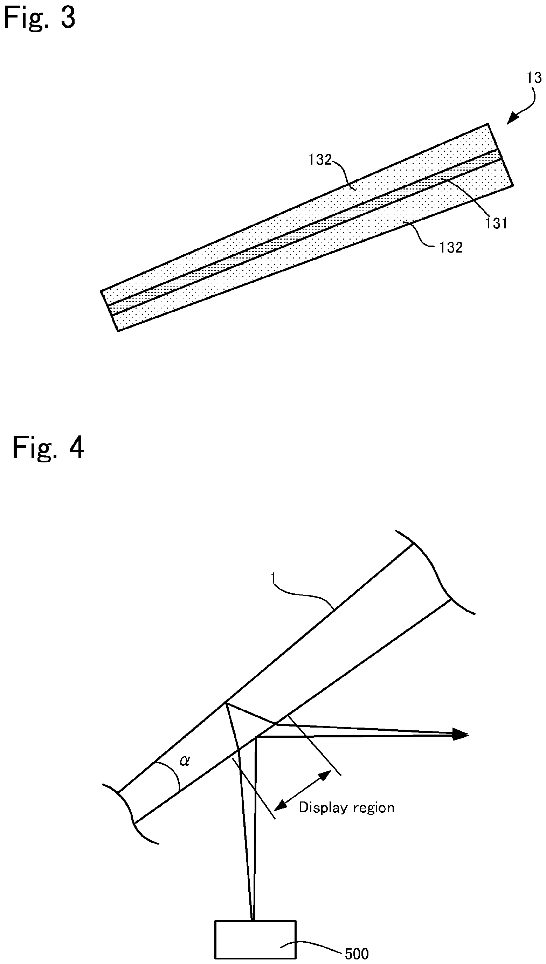

The interlayer 13 is constituted by at least one layer, and can be constituted by three layers, namely a soft core layer 131 and outer layers 132 that are harder than the core layer 131 and between which the core layer 131 is sandwiched as shown in FIG. 3, for example. However, the interlayer is not limited to this configuration, and may be constituted by a plurality of layers including the core layer 131 and at least one outer layer 132 that is arranged on the outer glass plate 11 side. For example, the interlayer 13 may be constituted by two layers, namely the core layer 131 and one outer layer 132 arranged on the outer glass plate 11 side. Alternatively, the interlayer 13 may be configured by arranging an even number of outer layers 132 on each side of the core layer 131 so that the core layer 131 is located at the center. Alternatively, the interlayer 13 may be configured by arranging an odd number of outer layers 132 on one side of the core layer 131 and arranging an even number of outer layers 132 on the other side so that the core layer 131 is sandwiched therebetween. It should be noted that if only one outer layer 132 is provided, the outer layer 132 is provided on the outer glass plate 11 side as described above, which is for the purpose of enhancing the breakage resistance performance with respect to an external force from the outside of a vehicle or a building. Moreover, when the number of outer layers 132 is increased, the sound insulation performance is improved.

There is no particular limitation on the hardness of the core layer 131 as long as the core layer 131 is softer than the outer layers 132. Although there is no particular limitation on the materials constituting the layers 131 and 132, the outer layers 132 can be made of a polyvinyl butyral resin (PVB), for example. Polyvinyl butyral resin has excellent adhesiveness to the glass plates and penetration resistance and is thus preferable. On the other hand, the core layer 131 can be made of, for example, an ethylene vinyl acetate resin (EVA) or a polyvinyl acetal resin, which is softer than the polyvinyl butyral resin included in the outer layers. When the soft core layer is sandwiched between the outer layers, the sound insulation performance can be significantly improved while maintaining the adhesiveness and the penetration resistance that are equivalent to those of a single-layered resin interlayer.

Generally, the hardness of a polyvinyl acetal resin can be controlled by adjusting (a) the degree of polymerization of a polyvinyl alcohol, which is the starting material, (b) the degree of acetalization, (c) the type of plasticizer, (d) the ratio of the plasticizer to be added, and the like. Accordingly, a hard polyvinyl butyral resin that is used for the outer layers 132 and a soft polyvinyl butyral resin that is used for the core layer 131 can be produced using the same polyvinyl butyral resin by appropriately adjusting at least one condition selected from the aforementioned conditions. Furthermore, the hardness of a polyvinyl acetal resin can also be controlled based on the type of aldehyde that is used for acetalization and whether co-acetalization using a plurality of types of aldehydes or pure acetalization using a single type of aldehyde is performed. Although not necessarily applicable to every case, the larger the number of carbon atoms of the aldehyde that is used to obtain a polyvinyl acetal resin is, the softer the resulting polyvinyl acetal resin tends to be. Accordingly, for example, if the outer layers 132 are made of a polyvinyl butyral resin, a polyvinyl acetal resin that is obtained by acetalizing an aldehyde having 5 or more carbon atoms (e.g., n-hexyl aldehyde, 2-ethylbutyl aldehyde, n-heptyl aldehyde, or n-octyl aldehyde) with polyvinyl alcohol can be used for the core layer 131. It should be noted that there is no limitation to the above-described resins and the like as long as predetermined Young's moduli can be obtained.

The total thickness of the interlayer 13 is not particularly specified, but is preferably 0.3 to 6.0 mm, more preferably 0.5 to 4.0 mm, and particularly preferably 0.6 to 2.0 mm. The thickness of the core layer 131 is preferably 0.1 to 2.0 mm, and more preferably 0.1 to 0.6 mm. On the other hand, the thickness of each outer layer 132 is preferably 0.1 to 2.0 mm, and more preferably 0.1 to 1.0 mm. It is also possible to fix the total thickness of the interlayer 13 while being able to adjust the thickness of the core layer 131. It should be noted that, if the interlayer 13 has a wedge shape, the layer thickness of the interlayer 13 refers to the thickness of a portion that has the smallest thickness. For example, if the windshield is attached to an automobile, the layer thickness of the interlayer refers to the thickness of the lowest portion of the interlayer.

The thicknesses of the core layer 131 and the outer layer 132 can be measured as described below, for example. First, a cross section of the laminated glass is enlarged by a factor of 175 and displayed using a microscope (e.g., VH-5500 manufactured by Keyence Corporation). Then, the thicknesses of the core layer 131 and the outer layer 132 are visually identified and measured. At this time, in order to eliminate variations seen in visual identification, measurement is performed five times, and an average value is taken as the thickness of the core layer 131 or the outer layer 132.

The interlayer 13 has a wedge-shaped cross section and the thickness of the interlayer increases upward. In this case, the total thickness of the interlayer 13 and the thicknesses of the core layer 131 and the outer layer 132 are measured in a portion with the smallest thicknesses, that is, the lowest side portion of the laminated glass. If the interlayer 13 is constituted by three layers as described above, it is sufficient that at least one of the core layer 131 and the pair of outer layers 132 has a wedge-shaped cross section.

The total thickness of the interlayer 13 is not particularly specified, but is preferably 0.3 to 6.0 mm, more preferably 0.5 to 4.0 mm, and particularly preferably 0.6 to 2.0 mm. The thickness of the core layer 131 is preferably 0.1 to 2.0 mm, and more preferably 0.1 to 0.6 mm. On the other hand, the thickness of each outer layer 132 is preferably larger than the thickness of the core layer 131, specifically, preferably 0.1 to 2.0 mm, and more preferably 0.1 to 1.0 mm. It is also possible to fix the total thickness of the interlayer 13 while being able to adjust the thickness of the core layer 131.

The thicknesses of the core layer 131 and the outer layer 132 can be measured as described below, for example. First, a cross section of the laminated glass is enlarged by a factor of 175 and displayed using a microscope (e.g., VH-5500 manufactured by Keyence Corporation). Then, the thicknesses of the core layer 131 and the outer layer 132 are visually identified and measured. At this time, in order to eliminate variations seen in visual identification, the measurement is performed five times, and an average value is taken as the thickness of the core layer 131 or the outer layer 132. For example, a photograph of the laminated glass is taken in an enlarged scale, and, in this photograph, the core layer and the outer layers 132 are identified and their thicknesses are measured.

Although there is no particular limitation on the method for manufacturing the interlayer 13, examples thereof include a method in which a resin component, such as the above-described polyvinyl acetal resin, a plasticizer, and other additives, if necessary, are mixed and uniformly kneaded, and then the layers are collectively extruded, and a method in which two or more resin films that are produced using this method are laminated using a pressing process, a lamination process, or the like. In the method for laminating using the pressing process, the lamination process, or the like, each of the resin films before laminating may have a single-layer structure or a multilayer structure. The interlayer 13 may be constituted by a single layer rather than the plurality of layers as described above.

3. Mask layer

As shown in FIG. 1, the mask layer 2 is layered on the periphery of the laminated glass using ceramic of a dark color such as black. The mask layer 2 blocks the view from the inside or the outside of the vehicle, and is layered along four sides of the laminated glass.

Various configurations can be employed for the mask layer 2, for example, the mask layer 2 can be provided only on an inner surface of the outer glass plate 11 or an inner surface of the inner glass plate 12, or can be provided on both the inner surface of the outer glass plate 11 and the inner surface of the inner glass plate 12. Although various materials can be used for the mask layer 2, the mask layer can have the following composition, for example.

Table 1

|  |  | First and second colored ceramic paste |
| --- | --- | --- |
| Pigment *1 | mass% | 20 |
| Resin (cellulose resin) | mass% | 10 |
| Organic solvent (pine oil) | mass% | 10 |
| Glass binder *2 | mass% | 65 |
| Viscosity | dPs | 150 |
| *1 Main components: copper oxide, chromium oxide, iron oxide, and manganese oxide<br>*2: Main components: bismuth borosilicate, zinc borosilicate | | |

Although the ceramic layer can be formed using a screen printing process, the layer can alternatively be produced by transferring a transfer film for firing to the glass plate and firing it. If screen printing is employed, the ceramic layer can be formed under the conditions that a polyester screen of 355 mesh is used, the coating thickness is 20 $\mu$m, the tension is 20 Nm, the squeegee hardness is 80 degrees, the attachment angle is 75°, and the printing speed is 300 mm/s, and performing drying in a drying furnace at 150°C for 10 minutes, for example.

Alternatively, the mask layer 2 can be formed by attaching a blocking film that is made of a dark colored resin, instead of laminating ceramic.

4. Head-up display device

Next, the head-up display device will be described. The head-up display device (also referred to as a HUD device) projects information such as the vehicle speed onto the windshield. However, it is known that, if a HUD device is used, a double image will be generated by light projected onto the windshield. That is, an image that is seen as a result of reflection off an inner surface of the windshield is seen separately from an image that is seen as a result of reflection off an outer surface of the windshield, and therefore an image is duplicated.

In order to prevent this, at least the display region of the windshield 1 onto which light is projected by a HUD device 500 is formed such that the thickness decreases downward as shown in FIG. 4. As a result, light that is reflected off the inner surface of the windshield 1 and then enters the inside of the vehicle and light that is reflected off the outer surface of the windshield and then enters the inside of the vehicle mostly match and the problem of generation of a double image is resolved. It should be noted that the wedge angle $\alpha$ of the windshield 1 in this case can be set to 0.01 to 0.04° (0.2 to 0.7 mrad), for example, although the wedge angle is set depending on the installation angle of the windshield 1.

5. Manufacturing method of windshield

Next, a manufacturing method of the windshield will be described. First, a manufacturing line of the glass plates will be described.

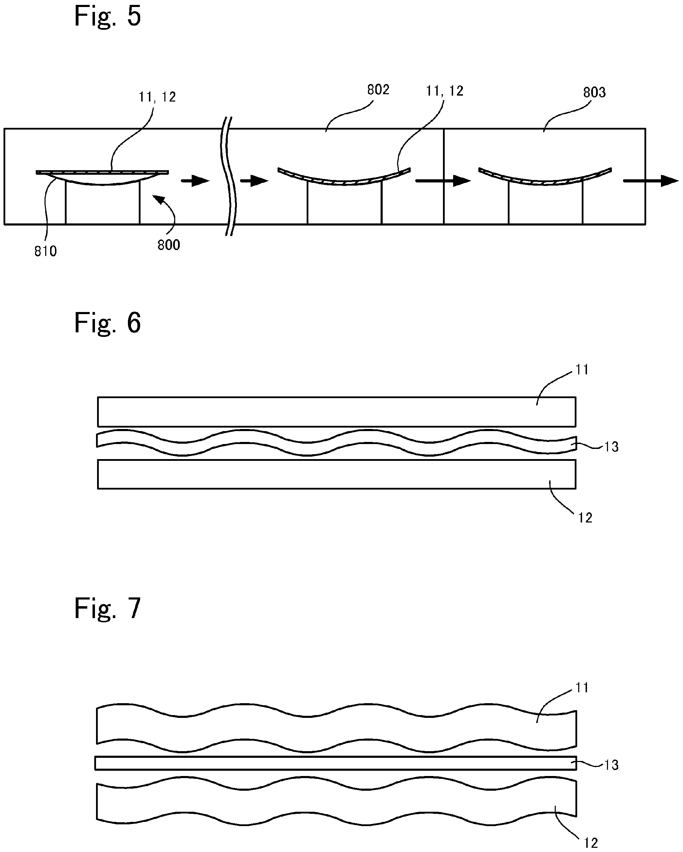

Here, a mold will be described in detail with reference to FIG. 5. FIG. 5 is a side view of furnaces through which the mold passes. As shown in FIG. 5, a mold 800 includes a mold main body having the shape of a frame that mostly matches the external forms of the glass plates 11 and 12. Since this mold main body 810 has the shape of a frame, there is an interior space that vertically penetrates the inner side of the mold main body. Peripheral portions of the glass plates 11 and 12 each having the shape of a flat plate are placed on an upper surface of the mold main body 810. Accordingly, heat is applied to the glass plates 11 and 12 via the interior space by a heater (not shown) that is arranged below the glass plates. When heat is applied, the glass plates 11 and 12 soften and curve downward under their own weight. In some cases, a shield plate for shielding the glass plates from heat is arranged on an inner periphery of the mold main body 810 to enable adjustment of heat applied to the glass plates 11 and 12. The heater can be arranged above the mold 800 as well as below the mold.

After the above-described mask layer 2 is layered on the outer glass plate 11 and the inner glass plate 12 having the shape of a flat plate, the outer glass plate 11 and the inner glass plate 12 are superimposed and passed through a heating furnace 802 in a state of being supported by the above-described mold 800 as shown in FIG. 5. When the glass plates 11 and 12 are heated to around the softening point in the heating furnace 802, portions of the glass plates inward of peripheral portions curve downward under their own weight and thus the glass plates are molded into a curved shape. Subsequently, the glass plates 11 and 12 are conveyed from the heating furnace 802 to an annealing furnace 803 to be subjected to annealing treatment. Thereafter, the glass plates 11 and 12 are conveyed out of the annealing furnace 803 and cooled.

After the outer glass plate 11 and the inner glass plate 12 are molded as described above, the interlayer 13 is sandwiched between the outer glass plate 11 and the inner glass plate 12. Next, the resultant laminate including the glass plates 11 and 12 and the interlayer 13 is placed into a rubber bag and preliminarily bonded together at about 70 to 110°C under vacuum suction. Preliminary bonding can be performed using a method other than this method, for example, the following method. For example, the above-described laminate is heated at 45 to 65°C in an oven. Subsequently, this laminate is pressed by a roller at 0.45 to 0.55 MPa. Then, this laminate is again heated at 80 to 105°C in an oven and thereafter again pressed by a roller at 0.45 to 0.55 MPa. Thus, preliminary bonding is finished.

Next, permanent bonding is performed. The preliminarily bonded laminate is permanently bonded using an autoclave at a pressure of 8 to 15 atmospheres and at 100 to 150°C, for example. Specifically, permanent bonding can be performed under the conditions of a pressure of 14 atmospheres and 135°C, for example. Through the above-described preliminary boding and permanent bonding, the interlayer 13 is bonded to the glass plates 11 and 12, and the windshield according to this embodiment is obtained. It should be noted that a curved windshield can be manufactured using a method other than this method, for example, pressing.

6. Measures for preventing double image

In recent years, enlarging the display region of the windshield 1 in which information is displayed by the head-up display device 500 has been considered. However, the inventors of the present invention found that, if the display region is enlarged, the problem of generation of a double image cannot be resolved even if the windshield 1 is formed so as to have a wedge-shaped cross section as described above. This is because wave-shaped irregularities are formed in a surface of the windshield 1, and it was found that, in particular, irregularities that include ridges and valleys extending in the horizontal direction affect generation of a double image. Although such irregularities do not cause problems if the display region is small, the inventors of the present invention found that generation of a double image is noticeable if the display region has a large size, such as 150 mm or more in the up-down direction and 150 mm or more in the horizontal direction, or 200 mm or more in the up-down direction and 200 mm or more in the horizontal direction, for example. Therefore, the inventors of the present invention came to the following measures for suppressing generation of a double image in such a large display region. It should be noted that a display region 15 is a rectangular region on the windshield that is defined by lines that pass through both ends of information (characters, a figure, or the like), which is displayed by the HUD device, in the up-down direction and lines that pass through both ends of the information in the horizontal direction.

6-1. Causes of generation of irregularities in surface of laminated glass

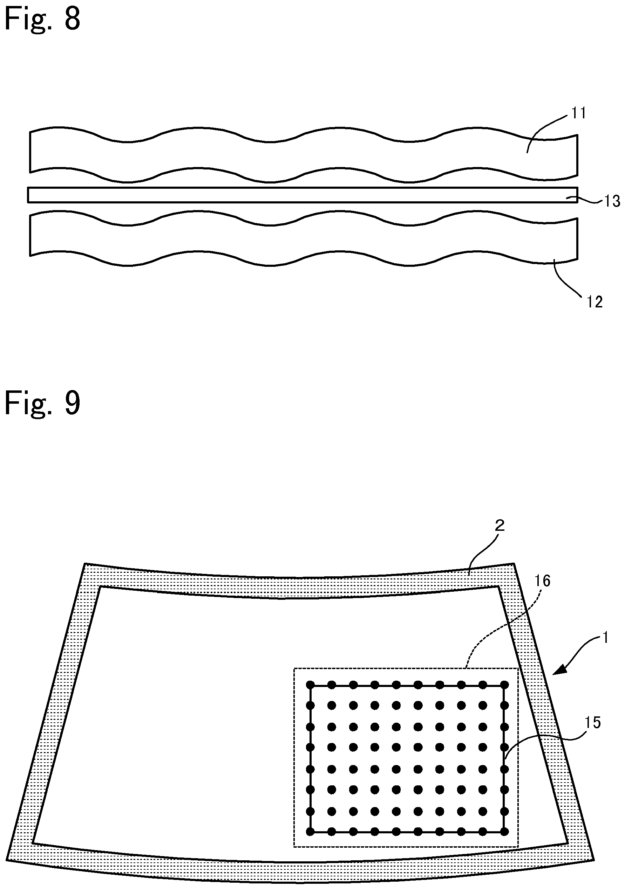

It is thought that a double image is mainly generated in any of the following cases or a combination thereof. First, as shown in FIG. 6, there is a case where almost no irregularities are formed in the outer glass plate 11 and the inner glass plate 12 but irregularities are formed in surfaces of the interlayer 13. In this case, when the glass plates 11 and 12 and the interlayer 13 are permanently bonded as described above, irregularities may also be formed in the glass plates 11 and 12 due to the irregularities in the interlayer 13.
Also, as shown in FIG. 7, there is a case where almost no irregularities are formed in the interlayer 13 but irregularities are formed in the glass plates 11 and 12. In this case as well, irregularities may be formed in a surface of the windshield 1. It should be noted that, the glass plates 11 and 12 in the example shown in FIG. 7 are bonded such that protruding portions of irregularities are located opposite to each other, but the glass plates 11 and 12 may be bonded such that a protruding portion and a recessed portion of irregularities are located opposite to each other as shown in FIG. 8.

6-2. Examination of wedge angle

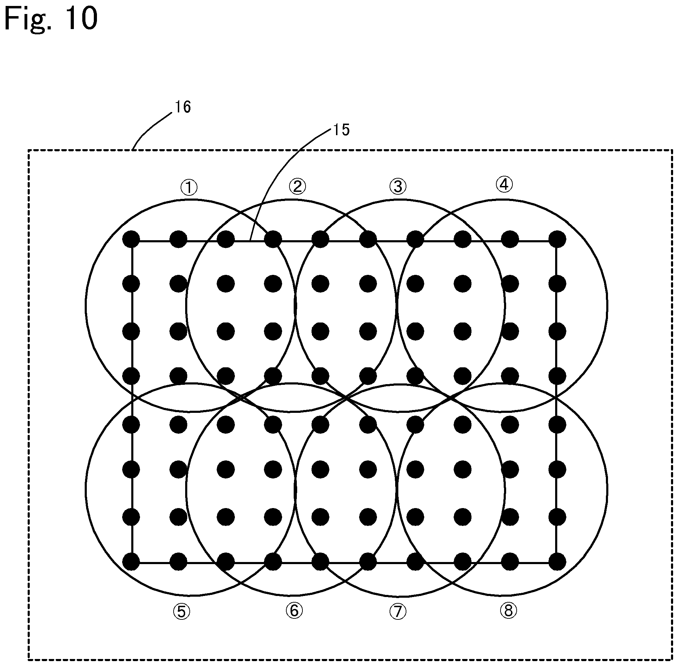

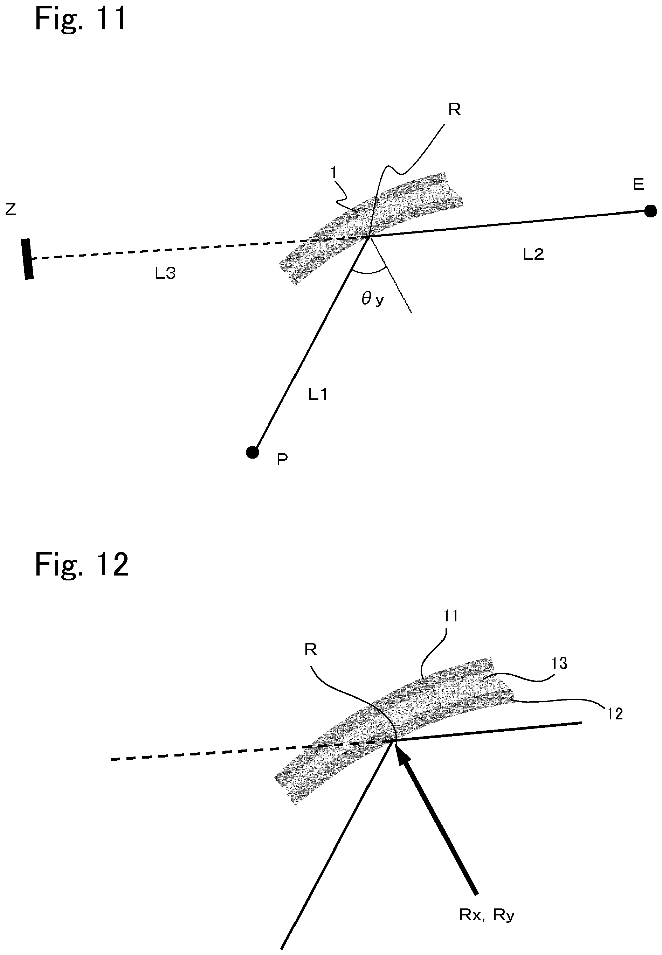

The inventors of the present invention found the following with regard to cases where irregularities are formed as described above. First, as shown in FIG. 9, lattice points that are arranged at a pitch of no greater than 20 mm are defined in the display region 15. Although the number of lattice points depends on the size of the display region, the maximum number of lattice points that can be set in the defined display region is set. Next, wedge angles at the lattice points are determined using an interferometer with $240 \times 240$ pixels or more. It was found that generation of a double image in the display region 15 is suppressed if the difference between the largest value and the smallest value of the thus obtained wedge angles at the lattice points is no greater than 0.32 mrad. If the display region 15 is large and measurement cannot be performed in one measurement using the interferometer, measurement is performed a plurality of times (eight times in the illustrated example) as shown in FIG. 10.
It should be noted that, according to studies carried out by the inventors of the present invention, "random variation in thickness of the interlayer" and "random irregularities formed in a glass surface at the interface between glass and air", which are main causes of variation in wedge angle, are caused by a convex lens portion or a concave lens portion that has a size of about 20 to 50 mm. Accordingly, if the density of the lattice points (measurement points) in the display region 15 is such that the lattice points are arranged at intervals (pitch) of no greater than 20 mm, evaluation can be performed without faulty portions being overlooked. Therefore, the pitch between the lattice points is preferably no greater than 15 mm, and more preferably no greater than 10 mm.
The above finding will be examined based on a specific calculation example. FIG. 11 is a diagram schematically showing the position of a virtual image generated by the HUD device. If a ray of light that is emitted from a pattern P, which is a light source, is reflected off an interior side surface of the laminated glass 1 and reaches an eye E of an observer, the reflection point and the incident angle $\theta y$ of the ray of light can be defined. A virtual image of the pattern P appears on an extension of a line that connects the eye E and the reflection point (incident point) R. At this time, the distance L3 between the reflection point R and the virtual image Z is determined by the distance L1 between the pattern P and the reflection point R, the distance L2 between the reflection point R and the eye E, and the lens effect of the reflection surface of the windshield.
FIG. 12 is an enlarged view of a portion of the laminated glass. As described above, the laminated glass 1 is constituted by three layers, namely the outer glass plate 11, the interlayer 13, and the inner glass plate 12, and the thicknesses of the glass plates 11 and 12 are constant, but the interlayer 13 has a wedge angle. Surfaces of the glass plates 11 and 12 are toric surfaces with respect to the reflection point R, and the radius of curvature in the sheet face of FIG. 12 is defined as Ry while the radius of curvature in a direction perpendicular to the sheet face of FIG. 12 is defined as Rx. All glass surfaces are assumed to be the same curved surfaces.

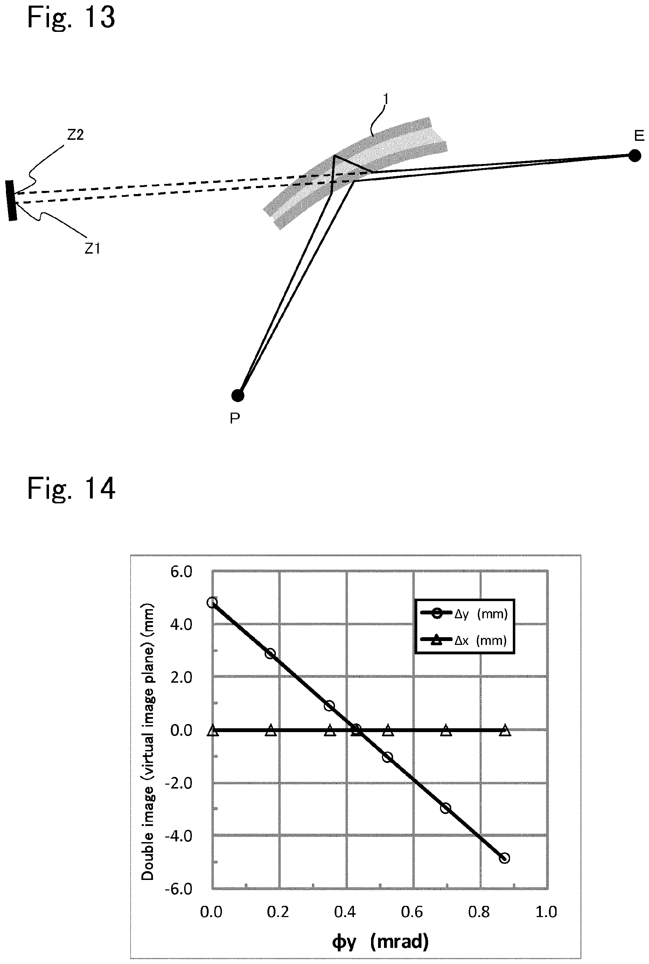

FIG. 13 is a diagram showing a path of light that is reflected off a vehicle exterior side surface (hereinafter referred to as a vehicle exterior surface) of the laminated glass 1 and a path of light that is reflected off a vehicle interior side surface (hereinafter referred to as a vehicle interior surface) of the laminated glass. The reflected light from the vehicle exterior surface and the reflected light from the vehicle interior surface have different paths from each other, and accordingly differ from each other in their positions in the virtual image plane. This is the cause of generation of a double image. Therefore, conditions regarding a typical windshield and a typical HUD device were set and the relationship between the wedge angle and the size of a double image was calculated. The calculation was performed using ray tracking software OSLO Premium Edition Rev. 6.3.0 manufactured by Lambda Research Corporation in the U.S.

Setting conditions

The thicknesses of the glass plates 11 and 12 constituting the laminated glass were each set to 2.0 mm and the refractive index of the glass plates was set to 1.52. The thickness of the interlayer 13 at the reflection point R was set to 0.8 mm and the refractive index of the interlayer was set to 1.48. The radii of curvature of the laminated glass 1 (toric surface) at the reflection point R were set to Rx = 4000 mm and Ry = 8000 mm. The incident angle $\theta y$ was set to 65°.
If the distance L1 between the pattern P and the reflection point R is 930 mm and the distance L2 between the reflection point R and the eye E is 1000 mm, the distance L3 between the reflection point R and the virtual image Z is 2000 mm due to the lens effect of the reflection surface of the laminated glass 1. If the thickness of the interlayer 13 increases rightward as shown in FIG. 12, a wedge angle $\phi y$ of the interlayer 13 takes a positive value. If, in the direction perpendicular to the sheet face of FIG. 12, the thickness of the interlayer 13 increases rearward and decreases forward, a wedge angle $\phi x$ of the interlayer 13 takes a positive value.
With regard to the positional relationship between virtual images, if a virtual image Z1 of light that is reflected off the vehicle interior surface is located below a virtual image Z2 of light that is reflected off the vehicle exterior surface as shown in FIG. 13, displacement $\Delta y$ takes a positive value. If, in the direction perpendicular to the sheet face of FIG. 13, the virtual image Z1 of light reflected off the vehicle interior surface is located on the rear side of the virtual image Z2 of light reflected off the vehicle exterior surface, displacement $\Delta x$ takes a positive value. In the following description, the displacement may be referred to as the size of a double image.

Calculation result

FIG. 14 shows values of the size $\Delta x$ and $\Delta y$ of a double image when the wedge angle $\phi x$ of the interlayer 13 was set to 0 and $\phi y$ was changed. If $\phi y = 0$ (i.e., there is no wedge angle), a large double image is generated in which $\Delta y = +4.8$ mm, but if the wedge angle $\phi y = +0.43$ mrad, values indicating the size of a double image are approximately zero. Further, a double image $\Delta x$ in the left-right direction is not generated.

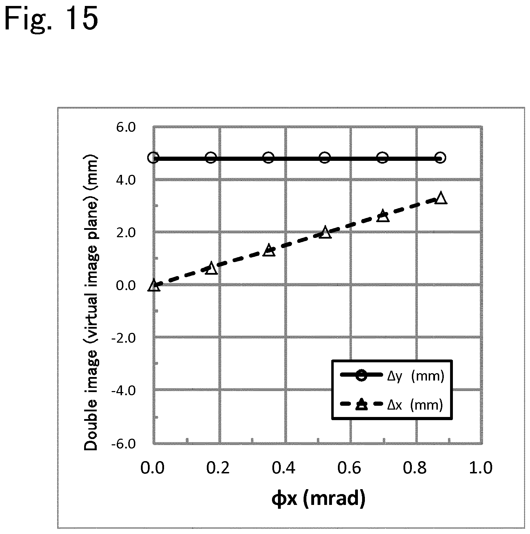

FIG. 15 shows values of the size $\Delta x$ and $\Delta y$ of a double image when the wedge angle $\phi y$ of the interlayer 13 was set to 0 and $\phi x$ was changed. Double images $\Delta x$ in the left-right direction are generated in proportion to the values of $\phi x$. However, the inclination of the graph is significantly smaller compared to that in FIG. 14. This indicates that generation of a double image $\Delta x$ in the left-right direction is not affected much by variation in the wedge angle $\phi x$.

Allowable range

As is clear from FIG. 14, the wedge angle $\phi y = 0.43$ mrad is the optimum value. However, the optical resolution of the naked eye has a limit, and therefore even if the wedge angle $\phi y$ slightly differs from the optimum value, a double image cannot be seen. The angular resolution of the naked eye is considered as 1 arc minute. In the case of this calculation example, the distance between the eye E and the virtual image Z is L2 + L3 = 3000 mm, and therefore the value of $\Delta y$ corresponding to an angle of 1 arc minute is 3000 $\times$ tan (1 arc minute) = 0.87 (mm) .
According to the inclination of the graph in FIG. 14, in order to bring the value of $\Delta y$ into the range of $\pm 0.87$ mm, it is sufficient that the value of $\phi y$ is in the range of 0.43 $\pm$ 0.078 mrad. In this range, the size of a double image is such that it cannot be detected with the naked eye.
Incidentally, the naked eye can exhibit optical resolution of 1 arc minute when a bright chart that has a high contrast and is used in an eye test is intensively stared. When an image generated by the HUD device is looked at under worse conditions, the optical resolution becomes a larger angle. If the substantial optical resolution when an image generated by the HUD device is seen is assumed to be 2 arc minutes, the range of allowable values of $\phi y$ is 0.43 $\pm$ 0.16 mrad. That is, it is sufficient that variation in wedge angle, namely the difference between the largest value and the smallest value of the wedge angle is no greater than 0.32 mrad.
Although the wedge angle of $\phi y = +0.43$ mrad is the optimum value in the above-described typical calculation example, the optimum value changes according to conditions such as the thickness of the windshield 1, the incident angle, the position of the virtual image Z, aberration correction of the HUD device, and the like. However, even if the optimum value changes according to conditions, a change in the allowable range is small, and therefore the same allowable range can be applied.

According to the above findings, the smaller variation between wedge angles at the lattice points is, the more generation of a double image in the display region 15 can be suppressed. Therefore, generation of a double image can be suppressed if the difference between the largest value and the smallest value of wedge angles at a plurality of lattice points is no greater than 0.32 mrad.

6-3. Suppression of irregularity formation in glass plate

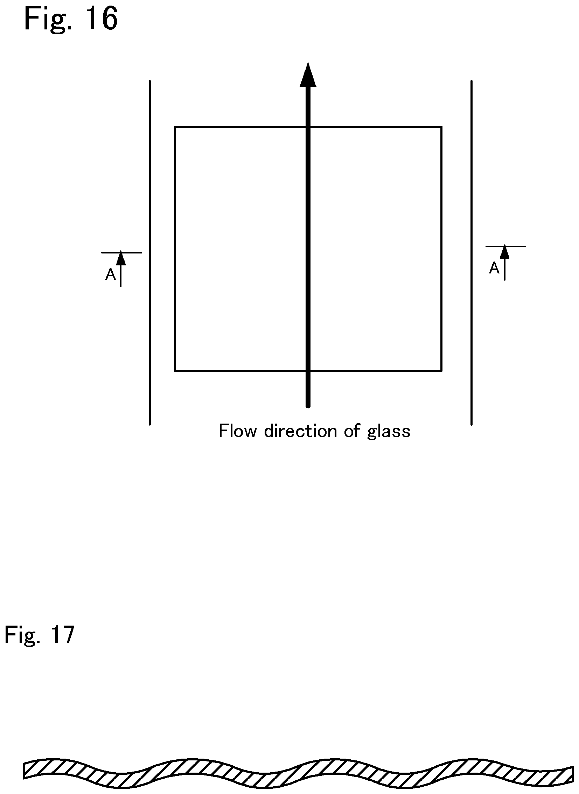

FIG. 16 is a plan view showing the flow of glass in a float method and FIG. 17 is a cross-sectional view taken along line A-A in FIG. 16. Although the glass plates 11 and 12 are typically formed using the float method, it is known that irregularities are likely to be formed in the float method in a direction orthogonal to the flow direction of glass as shown in FIGS. 16 and 17. Therefore, if a laminated glass is obtained by arranging the glass plates 11 and 12 such that the flow direction of glass extends in the up-down direction, irregularities can be formed such that ridges and valleys of the irregularities extend in the up-down direction. That is, it is possible to suppress formation of irregularities that include ridges and valleys extending in the horizontal direction and that largely affect generation of a double image. However, the flow direction of glass need not exactly match the up-down direction of the windshield, and an angle between the flow direction of glass and the up-down direction of the windshield is preferably 10° or less, for example.

If the flow direction of glass extends in the up-down direction as described above, irregularities in the horizontal direction necessarily increase, and there is a concern that generation of a double image in the left-right direction may become severe. However, the windshield 1 is installed in a state where the up-down direction of the windshield is largely inclined from the vertical direction. In such a case, a double image that is formed due to irregularities in the horizontal direction (i.e., variation in the wedge angle $\Delta x$) is significantly smaller than a double image that is formed due to irregularities in the up-down direction (i.e., variation in the wedge angle $\Delta y$) as shown in FIGS. 14 and 15. Therefore, generation of a double image in the horizontal direction is insignificant and negligible.

It should be noted that a double image is likely to be generated if surfaces of the glass plates 11 and 12 have irregularities of, for example, 0.1 $\mu$m/8 mm or more in the direction perpendicular to the flow direction of glass, but generation of a double image can be suppressed if the difference between the largest value and the smallest value of wedge angles at a plurality of lattice points is no greater than 0.32 mrad as described above. Such irregularities can be measured using, for example, SURFCOM 479A manufactured by TOKYO SEIMITSU CO., LTD. as a surface roughness measurement apparatus. Further, the size of irregularities can be adjusted by changing the conveyance speed of glass in the float method, for example.

6-4. Irregularities in interlayer

From the viewpoint of FIG. 7, irregularities that are formed in a surface of the laminated glass can be made small if the interlayer 13 has small irregularities before it is bonded to the glass plates 11 and 12. For example, if the interlayer 13 is formed from a plurality of resin layers, irregularities are formed at interfaces between the resin layers. Such an interlayer 13 is formed by laminating the plurality of layers by collectively extruding the layers, and irregularities can be reduced if the layers are extruded at a constant speed, for example. If the resin layers soften at high temperatures during formation, irregularities may become large. Accordingly, irregularities can also be reduced by adjusting the temperature. As described above, irregularities can be reduced by changing manufacturing conditions of the interlayer 13.

6-5. Installation angle of windshield

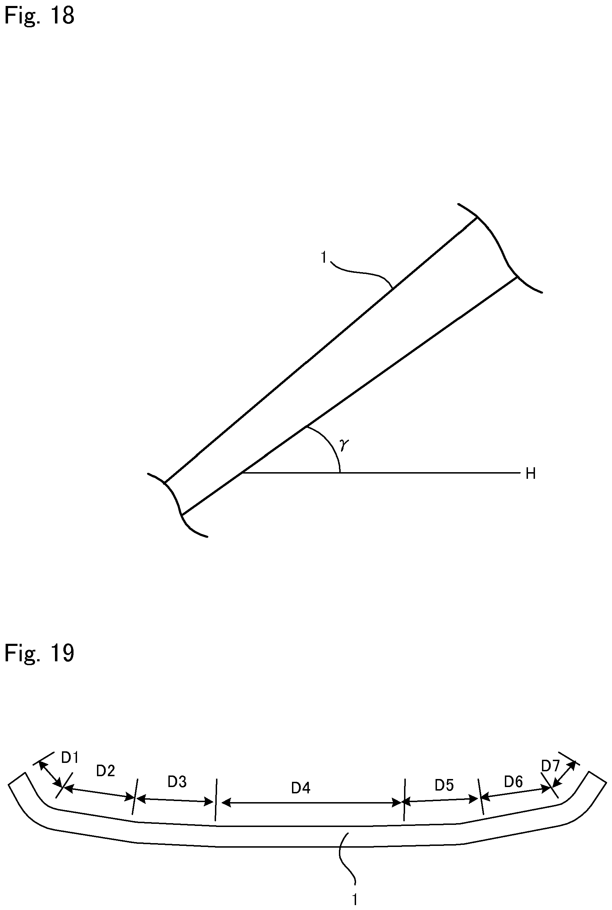

Generation of a double image can also be suppressed by adjusting the installation angle of the windshield 1. That is, as shown in FIG. 18, an installation angle $\gamma$ at which the windshield is installed in the vehicle is defined relative to a horizontal line H that extends in the horizontal direction. The installation angle $\gamma$ is an angle at the intersection between the horizontal line H and the vehicle interior surface of the laminated glass 1. If the installation angle $\gamma$ decreases, the incident angle and the reflection angle of light shown in FIG. 4 increase, and accordingly generation of a double image becomes noticeable. However, generation of a double image can be favorably suppressed with the windshield of the present invention even if the installation angle $\gamma$ is small as described above. From this standpoint, the installation angle $\gamma$ is preferably 60° or less, and more preferably 45° or less. On the other hand, if the installation angle $\gamma$ is too large, the HUD device 500 is located between the windshield and the driver and becomes a hindrance, and therefore the installation angle $\gamma$ is preferably no greater than 60°. The installation angle $\gamma$ is defined with respect to the vehicle interior surface for the following reason. That is, the laminated glass 1 according to this embodiment has a wedge angle, and therefore the vehicle interior surface and the vehicle exterior surface are not parallel to each other. On the other hand, a double image is generated due to inclination of the vehicle interior surface. Therefore, the installation angle $\gamma$

according to this embodiment is defined as the angle between the horizontal line H and the vehicle interior surface of the laminated glass.

7. Variations

Although one embodiment of the present invention has been described, the present invention is not limited to the above embodiment, and various alterations can be made without departing from the gist of the present invention.

7-1.

As shown in FIG. 19, the windshield 1 is formed by a plurality of regions that are continuous to each other and differ from each other in radius of curvature in the horizontal direction. For example, in the example shown in FIG. 19, the windshield 1 has an inner surface that is formed by seven regions D1 to D7 that have different radii of curvature and are connected to each other. Here, the radii of curvature of the inner surface in the regions D1 to D7 are denoted with R1 to R7, respectively. However, the inner surface is symmetrical in the left-right direction, and accordingly the radii of curvature are the same between D1 and D7, between D2 and D5, and between D3 and D6. Further, the relationship between the radii of curvature is as follows.

$$R4 > R3 = R6 > R2 = R5 > R1 = R7$$

If the radius of curvature decreases, distortion of an image of information that is projected onto the display region 15 increases, and therefore the display region 15 is preferably provided in a region where the radius of curvature is as large as possible. Accordingly, the display region 15 is preferably provided in any of the regions D2 to D6.

7-2.

In the above embodiment, the windshield 1 is formed so as to have a wedge-shaped cross section by forming the interlayer 13 so as to have a wedge-shaped cross section, but the laminated glass can be formed so as to have a wedge-shaped cross section by forming at least one of the outer glass plate 11 and the inner glass plate 12 so as to have a wedge-shaped cross section, for example.

Examples

The following describes an example of the windshield according to the present invention. However, the present invention is not limited to the following example.

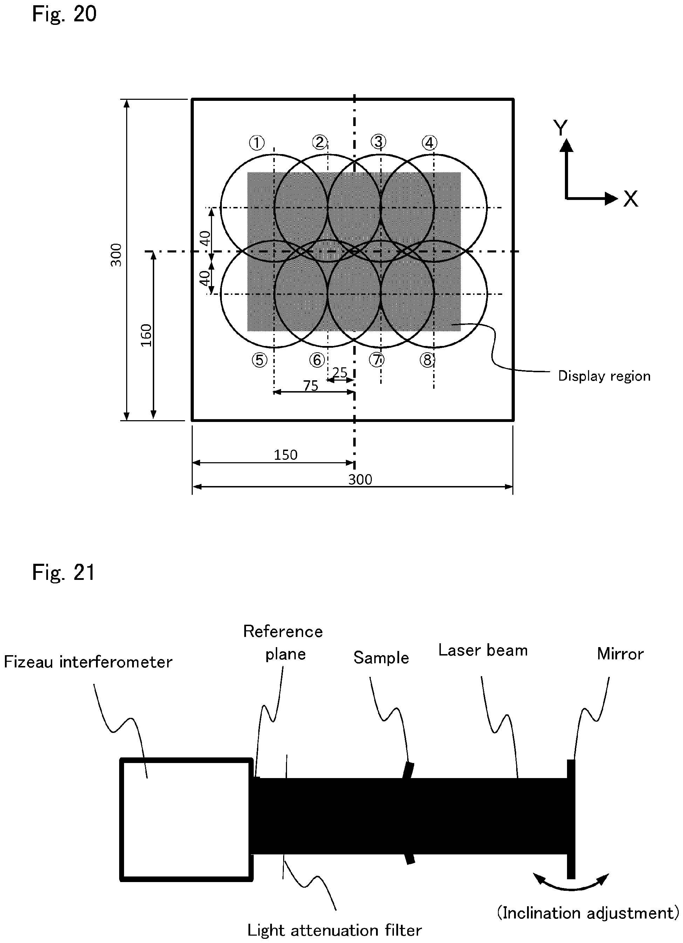

In this example, evaluation was performed using a sample with a size of 300 × 300 mm as shown in FIG. 20 that was cut out from a windshield (schematic shape: length in the up-down direction of 1060 mm × length in the left-right direction of 1560 mm) that is constituted by a laminated glass. A display region (length in the left-right direction of 200 mm × length in the up-down direction of 150 mm) onto which information is projected by a HUD device was provided at approximately the center of this sample. The thicknesses of an outer glass plate, an interlayer, and an inner glass plate at the center (position spaced from each side by 150 mm) of the sample were 2.0 mm, 0.7 mm, and 2.0 mm, respectively. The glass plates were obtained by subjecting flat glass plates, which were manufactured using the float method, to bending using a high-accuracy pressing process. The interlayer that was used had a wedge angle that was provided in advance in the up-down direction of the windshield over the entire surface. As a result of the wedge angle being provided, the thickness of the interlayer increased upward in the windshield.

The windshield was subjected to bending, and accordingly surfaces of the sample were constituted by curved surfaces. If the left-right direction and the up-down direction in a state where the windshield is attached to an automobile are defined as a y direction and an x direction, respectively, the radius of curvature Rx in the x direction at the center of the sample was 2700 mm and the radius of curvature Ry in the y direction at the center of the sample was 9500 mm. However, the values of Rx and Ry slightly change according to positions on the sample.

Design values of wedge angles were constant over the entire display region, and the design value of the wedge angle in the Y direction was 0.40 mrad (the thickness increases upward) and the design value of the wedge angle in the X direction was 0. On the other hand, actual wedge angles of the sample were evaluated using a device shown in FIG. 21. A parallel laser beam (diameter: 102 mm, wavelength: 632.8 nm) was emitted via a reference plane from a Fizeau interferometer (model MARK GPI xps, manufactured by Zygo Corporation in the U.S.) shown in this figure toward the sample (outwardly protruding surface side) through an extremely thin light attenuation filter. The parallel laser beam passed through the sample was reflected off a mirror (diameter: 96 mm) and returned to the interferometer travelling the same path backward. This reflected light was allowed to interfere with reflected light from the reference plane to generate interference fringes. A CCD image of the interference fringes with $320 \times 240$ pixels was taken and analyzed.

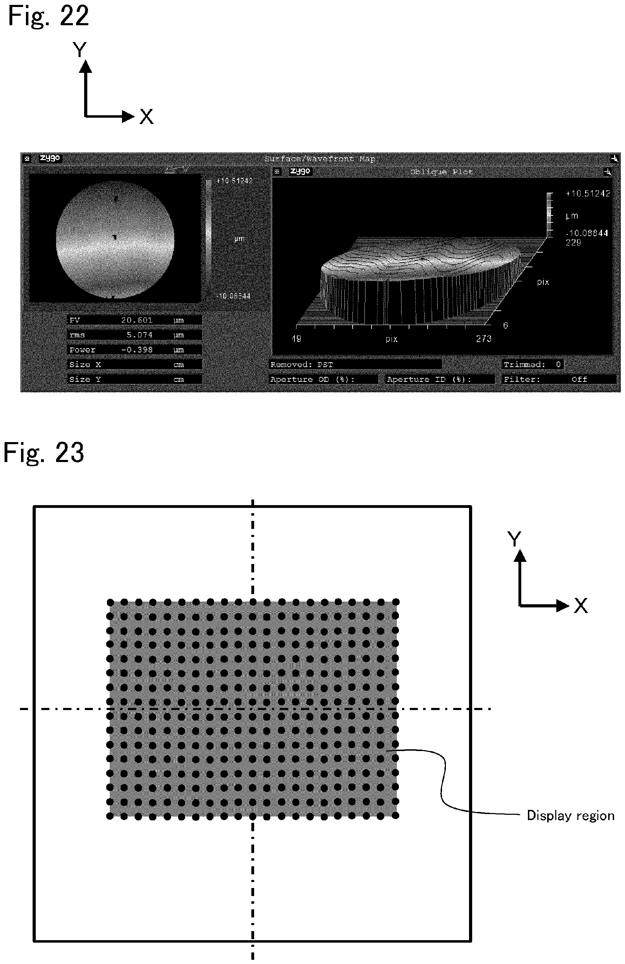

FIG. 22 shows an example of inclination of a wave front within a diameter of 96 mm illustrated by analyzing the pattern of the interference fringes. If the wave front has passed through a thick portion of the sample, the phase is delayed, and therefore the inclination of the wave front corresponds to a change in thickness of the sample, namely the wedge angle. If the wedge angle is constant, the wave front takes on a flat plane that has a constant inclination. In the example shown in FIG. 22, the wave front does not have a perfect flat plane and has fluctuation as a result of the wedge angle changing between different positions.

A high portion of the wave front corresponds to a thin portion of the sample, and the recorded wave front difference of 1 μm corresponds to a change in thickness of 2.083 μm. This change in thickness was calculated using an expression 1/ (1.48 - 1) = 2.083 assuming that the refractive index of the interlayer having the wedge angle was 1.48. As shown in FIG. 20, the measurement using the interferometer was performed eight times at different positions ((1) to (8)) on the sample. The display region was covered by the eight measurements.

Example

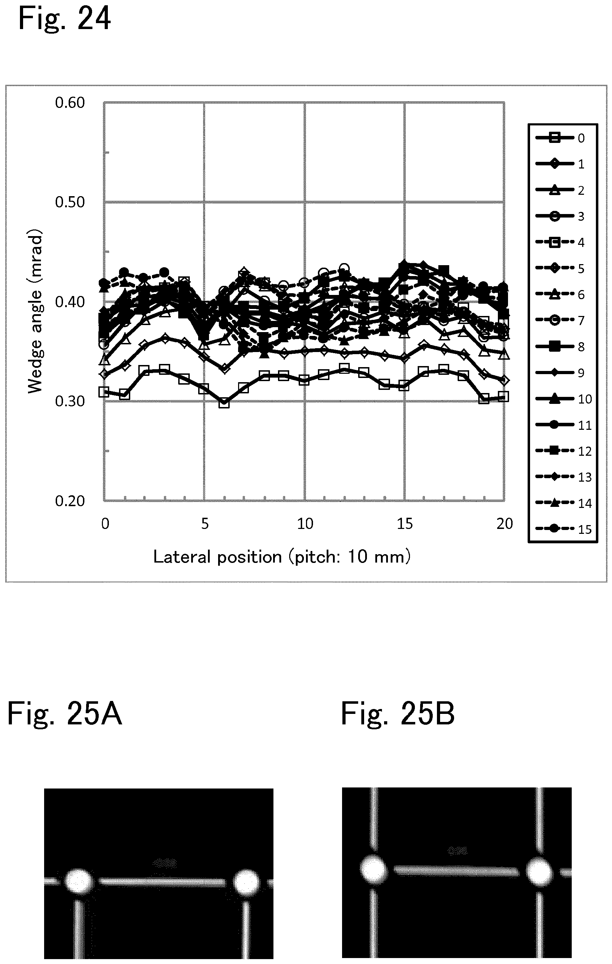

Based on data obtained using the interferometer through the above-described method, 21 lattice points were defined in the lateral direction and 16 lattice points were defined in the lengthwise direction at intervals of 10 mm in the X and Y directions using the center of the display region as the base point. Here, lattice point numbers were set in the left-right direction with a lattice point number 0 being allocated at the left end and a lattice point number 20 being allocated at the right end. Also, lattice point numbers were set in the up-down direction with a lattice point number 0 being allocated at the upper end and a lattice point number 15 being allocated at the lower end. Then, wedge angles in the Y direction at respective lattice points were calculated. FIG. 24 collectively shows values of the wedge angles at the lattice points, in which wedge angles in the Y direction at 21 lattice points (with lattice point numbers 0 to 21 in the left-right direction) that were arranged in a line in the lateral direction are plotted and connected by a line. That is, FIG. 24 shows 16 lines (with lattice point numbers 0 to 15 in the up-down direction) that are arranged in the up-down direction. The values of wedge angles fall in the range from -0.10 to +0.04 mrad relative to the design value of 0.40 mrad. This variation is sufficiently smaller than the allowable value of 0.32 mrad obtained based on the calculation example.

FIGS. 25A and 25B show photographs of projected virtual images that were generated by the HUD device in this example. FIG. 25A shows displacement that occurred in the vicinity of a lattice point (No. 15 in the left-right direction and No. 9 in the up-down direction) that had the largest wedge angle in the Y direction. The wedge angle at this lattice point had a difference of +0.05 mrad from the reference wedge angle of 0.40 mrad, and the displacement Δy in the Y direction was -0.6 mm. On the other hand, FIG. 25B shows displacement that occurred in the vicinity of a lattice point (No. 6 in the left-right direction and No. 0 in the up-down direction) that had the smallest wedge angle in the Y direction. The wedge angle at this lattice point had a difference of -0.09 mrad from the reference wedge angle of 0.40 mrad, and the displacement Δy in the Y direction was +1.0 mm. That is, the difference between the largest value and the smallest value of wedge angles in the Y direction at all of the lattice points was 0.14 mrad. This result shows that, if variation in wedge angle is no greater than 0.32 mrad, generation of a double image is sufficiently suppressed as shown in these figures. As described above, generation of a double image in the Y direction was suppressed in this example, and the windshield of this example can be appropriately used with a HUD device that forms a large display region as described above.

Comparative example

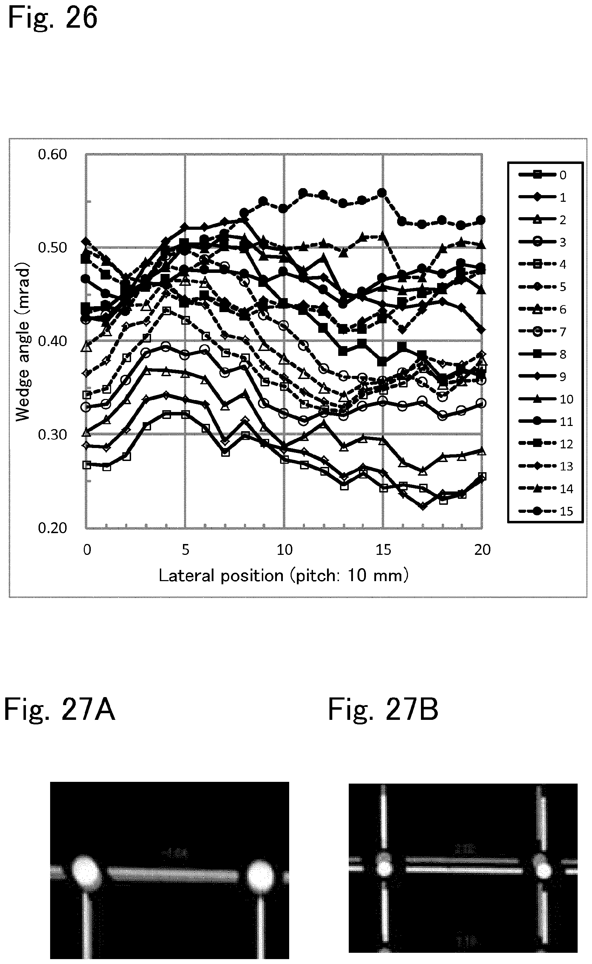

The same evaluation was performed on a sample different from that used in the example. FIG. 26 collectively shows values of wedge angles at respective lattice points . The values of wedge angles fall in the range from -0.18 to +0.16 mrad relative to the design value of 0.40 mrad and this variation exceeds the allowable value of 0.32 mrad obtained based on the calculation example.

FIGS. 27A and 27B show photographs of projected virtual images that were generated by the HUD device in this comparative example. FIG. 27A shows displacement that occurred in the vicinity of a lattice point (No. 11 in the left-right direction and No. 15 in the up-down direction) that had the largest wedge angle in the Y direction. The wedge angle at this lattice point had a difference of +0.15 mrad from the reference wedge angle of 0.40 mrad, and the displacement Δy in the Y direction was -1.7 mm. On the other hand, FIG. 27B shows displacement that occurred in the vicinity of a lattice point (No. 17 in the left-right direction and No. 2 in the up-down direction) that had the smallest wedge angle in the Y direction. The wedge angle at this lattice point had a difference of -0.18 mrad from the reference wedge angle of 0.40 mrad, and the displacement Δy in the Y direction was +2.0 mm. That is, the difference between the largest value and the smallest value of wedge angles in the Y direction at all of the lattice points was 0.33 mrad. This result shows that, if variation in wedge angle is greater than 0.32 mrad, a noticeable double image appears as shown in these figures. As described above, generation of a double image in the Y direction was serious in this comparative example, and the windshield of this comparative example is not suitable for use with a HUD device.

List of Reference Numerals

| | |
|---|---|
| 11 | Outer glass plate |
| 12 | Inner glass plate |
| 13 | Interlayer |
| 500 | Head-up display device |

**Claims**

1. A windshield that has a display region onto which information is projected using light emitted from a head-up display device, the windshield comprising:

   an outer glass plate;
   an inner glass plate that is arranged opposite to the outer glass plate; and
   an interlayer that is arranged between the outer glass plate and the inner glass plate,
   wherein lattice points are defined at a pitch of no greater than 20 mm in the display region, and
   when wedge angles at the lattice points are measured using an interferometer with 240 × 240 pixels or more,
   a difference between the largest value and the smallest value of the wedge angles is no greater than 0.32 mrad.

2. The windshield according to claim 1,
   wherein the display region has a size of 150 mm or more in an up-down direction and 150 mm or more in a horizontal direction.

3. The windshield according to claim 1 or 2,
   wherein the interlayer has a wedge-shaped cross section and a thickness of the interlayer increases upward.

4. The windshield according to any one of claims 1 to 3,
   wherein the outer glass plate and the inner glass plate are arranged such that a flow direction of glass in a float method extends in an up-down direction.

5. The windshield according to claim 4,
   wherein the outer glass plate and the inner glass plate have irregularities of 0.1 $\mu$m/8 mm or more in a direction perpendicular to the flow direction of glass.

6. The windshield according to claim 4 or 5,
   wherein an angle between the flow direction of glass and the up-down direction is 10° or less.

7. The windshield according to any one of claims 1 to 6,
   wherein the windshield is installed in a vehicle at an installation angle of 60° or less relative to a horizontal direction.

8. The windshield according to any one of claims 1 to 7,
   wherein the inner glass plate has a plurality of regions that differ from each other in radius of curvature in a horizontal direction, and
   the display region is formed in a region other than a region that has the largest radius of curvature out of the plurality of regions.

9. A method for manufacturing a windshield that has a display region onto which information is projected using light emitted from a head-up display device, the method comprising steps of:

   preparing an outer glass plate;
   preparing an inner glass plate;

preparing an interlayer; and

arranging the interlayer between the outer glass plate and the inner glass plate and bonding together the outer glass plate, the inner glass plate, and the interlayer,

wherein lattice points are defined at a pitch of no greater than 20 mm in the display region, and

when wedge angles at the lattice points are measured using an interferometer with 240 × 240 pixels or more, a difference between the largest value and the smallest value of the wedge angles is no greater than 0.32 mrad.

10. The method for manufacturing a windshield according to claim 9,

wherein the outer glass plate and the inner glass plate are formed using a float method, and

the outer glass plate and the inner glass plate are arranged such that a flow direction of glass in the float method extends in an up-down direction.

Fig. 1

Fig. 2

Fig. 3

Fig. 4

Display region

## Fig. 5

## Fig. 6

## Fig. 7

Fig. 8

Fig. 9

Fig. 10

## Fig. 11

R

1

Z

L3

E

L2

$\theta\,y$

L1

P

## Fig. 12

11

R

13

12

Rx, Ry

## Fig. 13

## Fig. 14

Fig. 15

Fig. 16

Flow direction of glass

Fig. 17

Fig. 18

Fig. 19

Fig. 20

Display region

Fig. 21

Fizeau interferometer

Reference plane

Sample

Laser beam

Mirror

Light attenuation filter

(Inclination adjustment)

Fig. 22

Fig. 23

Display region

Fig. 24

Fig. 25A          Fig. 25B

## Fig. 26

## Fig. 27A

## Fig. 27B

## INTERNATIONAL SEARCH REPORT

| International application No. |
|---|
| PCT/JP2018/012138 |

**A. CLASSIFICATION OF SUBJECT MATTER**
Int. Cl. B60J1/02(2006.01)i, B60J1/00(2006.01)i, C03C27/12(2006.01)i, G02B27/01(2006.01)i

According to International Patent Classification (IPC) or to both national classification and IPC

**B. FIELDS SEARCHED**

Minimum documentation searched (classification system followed by classification symbols)
Int. Cl. B60J1/02, B60J1/00, C03C27/12, G02B27/01

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2014-24752 A (SAINT-GOBAIN GLASS FRANCE) 06 February 2014, paragraphs [0033]-[0070], fig. 1-8 & US 2010/0314900 A1, paragraphs [0042]-[0081], fig. 1-8 & DE 102007059323 A1 & DE 102008008758 A1 & DE 102007059323 A1 & KR 10-2010-0094987 A & CN 101888927 A | 1-10 |
| A | JP 2016-215977 A (ASAHI GLASS CO., LTD.) 22 December 2016, paragraphs [0012]-[0045], fig. 1-6 (Family: none) | 1-10 |
| A | WO 2016/208370 A1 (NIPPON SHEET GLASS CO., LTD.) 29 December 2016, paragraphs [0061]-[0132], fig. 8-34 (Family: none) | 1-10 |

☐ Further documents are listed in the continuation of Box C.          ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31.05.2018 | 12.06.2018 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007223883 A